# FASCICULE DE BREVET EUROPEEN

(11) **EP 0 587 838 B1**
(45) Date de publication et mention de la délivrance du brevet: **26.08.1998**
(21) Numéro de dépôt: 93905445.8
(22) Date de dépôt: 02.03.1993
(51) Int. Cl.: H04N 7/24

(54) **PROCEDE DE CODAGE D'IMAGES A TRES BAS DEBIT ET DISPOSITIF DE CODAGE METTANT EN OEUVRE CE PROCEDE**
VERFAHREN ZUR KODIERUNG VON BILDERN MIT SEHR NIEDRIGER DATENRATE UND KODIERUNGSVORRICHTUNG ZUR AUSFÜHRUNG DIESES VERFAHRENS
VERY LOW BIT RATE IMAGE CODING METHOD AND CODER THEREFOR

(30) Priorité: 03.03.1992 FR 9202499
(43) Date de publication de la demande: 23.03.1994
(73) Titulaire: THOMSON multimedia, 92648 Boulogne Cédex (FR)
(72) Inventeur: CHEVANCE, Christophe Thomson-CSF S.C.P.I., F-92402 Courbevoie Cédex (FR); THOREAU, Dominique Thomson-CSF S.C.P.I., F-92402 Courbevoie Cédex (FR)
(74) Mandataire: Ruellan-Lemonnier, Brigitte
(86) Numéro de dépôt international: FR9300209
(87) Numéro de publication internationale: WO9318615

(56) Documents cités:
- EP-A- 0 534 282
- PROCEEDINGS OF THE NATIONAL COMMUNICATIONS FORUM vol. 42, no. 2, 30 Septembre 1988, OAK BROOK, ILLINOIS US pages 1678 - 1682 H.GHARAVI 'Low bit rate television on ISDN'
- PROCEEDINGS PATTERN RECOGNITION AND IMAGE PROCESSING 1979, CHICAGO; 6 Août 1979, IEEE, NEW YORK, US; pages 568 - 575 A.PLOYSONGSANG ET AL. 'DCT/DPCM processing of NTSC composite video signal'
- SIGNAL PROCESSING. IMAGE COMMUNICATION vol. 1, no. 2, Octobre 1989, AMSTERDAM NL pages 103 - 115 K.GROTZ ET AL. 'A 64Kbit/s codec with forward analysis and control'
- CCITT - RECOMMENDATION H261 no. 584, Avril 1990, pages 120 - 128 'Codec for audiovisual services at nx384kbit/s' cité dans la demande
- ICASSP 89 INTERNATIONAL CONFERENCE ON ACOUSTICS, SPEECH AND SIGNAL PROCESSING, GLASGOW; 23 Mai 1989, IEEE,NEW YORK, US; pages 1671 - 1674 SAITO ET AL. 'SELF-ORGANIZING PATTERN-MATCHING CODING FOR PICTURE SIGNALS'

## Description

La présente invention concerne un procédé de codage d'images à très bas débit et un dispositif de codage-décodage mettant en oeuvre ce procédé.

Elle s'applique notamment à la réalisation de CODEC numériques bas débits dont la gamme des débits est comprise entre 8 à 16 Kb/s.

Dans ces codeurs les principaux modes de codage utilisés sont les modes de codage intra-image et les modes de codage inter-image avec compensation de mouvement. Le mode intra-image est cependant très peu utilisé par le fait que d'une part, il est extrêmement onéreux en nombre de bits transmis, et que d'autre part, les changements de séquence dans les images transmises posent généralement d'énormes problèmes qui sont la cause par exemple de débordements de la capacité d'enregistrement des mémoires tampons .

Parmi les méthodes de codage connues, celles décrites par exemple par la norme "CITT spécialist Group on coding for visual telephony. Recommandation H261 version 11/1989" est certainement celle qui est la mieux adaptée pour transmettre des images à très faible débit car elle opère en mode différentiel dans le domaine temporel et par transformée cosinus dans le domaine spatial. L'intérêt majeur de travailler en mode différentiel inter-image est de réduire la redondance et par là même la quantité d'informations à coder. L'utilisation du mode de codage par transformée cosinus a l'avantage de fournir une image totalement décorrélée. Cependant, il est nécessaire d'utiliser à la fois des transformées cosinus directes et des transformées de cosinus inverses car les prédictions faites aux niveaux des codeurs et décodeurs ont lieu dans le domaine spatial.

En outre, cela nécessite de structurer l'image en blocs et macroblocs, un macrobloc étant constitué par exemple de quatre blocs de luminance de taille 8x8 et de deux blocs de signal de chrominance. Un macrobloc de luminance 16x16 représente sur l'image la même surface qu'un bloc de chrominance de 8x8 en raison du sous-échantillonnage qui est utilisé. Un filtre passe-bas est introduit dans la boucle de codage pour réduire les artéfacts dans les hautes fréquences dus à la compensation de mouvement et de diminuer le bruit de quantification dans la boucle de prédiction. Le choix du mode de codage dans une approche a priori, avant codage des coefficients, est chronologiquement réalisé en effectuant d'abord un choix entre le mode compensé en mouvement et le mode inter-image, ce choix étant guidé sur des mesures de différences inter-image, puis un choix entre le mode retenu et le mode intra-image par comparaison de l'activité, ou variance, des niveaux des gris contenus dans les blocs à transmettre .

Une mémoire d'image contenant l'image précédente reconstruite permet d'opérer en mode différentiel dans le domaine temporel via des prédicteurs inter-image et inter-image compensé en mouvement. Selon l'état de remplissage de la mémoire tampon les coefficients sont quantifiés puis déquantifiés avec un pas qui est calculé par l'organe de régulation. Un codage à longueur variable assure l'adaptation des mots de code aux propriétés statistiques des informations à transmettre. Le rôle de la régulation est de faire évoluer les différents paramètres de codage du contenu de l'image à transmettre en vue d'assurer le débit requis. Le multiplexage vidéo a pour fonction d'engendrer un train binaire contenant entre autres les coefficients codés, les modes de codage intra inter, inter-image compensé et les mots de synchronisation des différentes structures des images. Cependant, bien que performant ce mode de régulation fait toujours courir le risque qu'un débordement de la mémoire tampon se produise, à l'initialisation notamment lors de la transmission de la première image ou lors de changements de la scène observée dans les séquences d'images et oblige à arrêter la transmission des images chaque fois que ce risque est présent ce qui est préjudiciable à l'intégrité de l'information transmise.

"Proceedings of the National Communications Forum, Vol. 42, No. 2, 30 Septembre 1988, pages 1678 à 1682 décrit un codage avec un mode intra dans lequel la valeur d'un pixel est soustraite des premiers coefficients DCT des sous-blocs voisins horizontaux et verticaux,

"Proceedings, Pattern Recognition and Image Processing 1979", 6 Août 1979, pages 568 à 575 décrit un codage DPCM sur un sous-bloc courant et un sous-bloc voisin avec un premier coefficient DCT le plus proche.

EP-A-0 534 282, publié après la date de priorité, décrit un procédé par lequel la différence entre le bloc courant d'une image et un bloc voisin de la même image qui donne la meilleure prédiction du bloc courant est codée et transmise. Le procédé ne comprend pas de modes "inter". Le dispositif n'est pas le même que dans la présente demande.

Le but de l'invention est de pallier l'inconvénient précité.

A cet effet, l'invention a pour objet un procédé de codage différentiel de blocs d'images de télévision à base de codage inter-image simple et inter-image avec compensation de mouvement caractérisé en ce qu'il comporte également un mode "inter dans l'intra" qui consiste à coder la différence pixel par pixel entre le bloc courant de l'image à transmettre et un parmi quatre blocs de l'image courante reconstruite dans le plus proche voisinage du bloc courant, le bloc sélectionné étant celui qui parmi les quatre donne pour le codage la meilleure prédiction du bloc courant.

L'invention a également pour objet un dispositif pour la mise en oeuvre du procédé.

Le procédé et le dispositif ont pour avantage qu'ils permettent de réduire l'utilisation du mode de codage intra-image lors du changement brusque d'une scène observée par exemple, lors de la transmission de la première image d'une séquence ou lors de changement de scènes ou de variations de gains du capteur d'image. La substitution du mode de codage selon l'invention, au mode de codage intra-image permet de réduire considérablement le coût de codage des blocs et d'éviter d'augmenter le pas de quantification des coefficients transformés. L'invention a également pour avantage qu'elle permet de réduire le temps de convergence du codeur vers le fonctionnement en régime permanent.

D'autres caractéristiques et avantages de l'invention apparaîtront ci-après à l'aide de la description qui suit faite en regard des dessins annexés qui représentent
- la figure 1 un mode de réalisation d'un codeur selon l'invention ;
- la figure 2 un mode de réalisation d'un décodeur selon l'invention ;
- la figure 3 une illustration du mode de prédiction d'un macrobloc courant à l'aide de macroblocs voisins reconstruits.

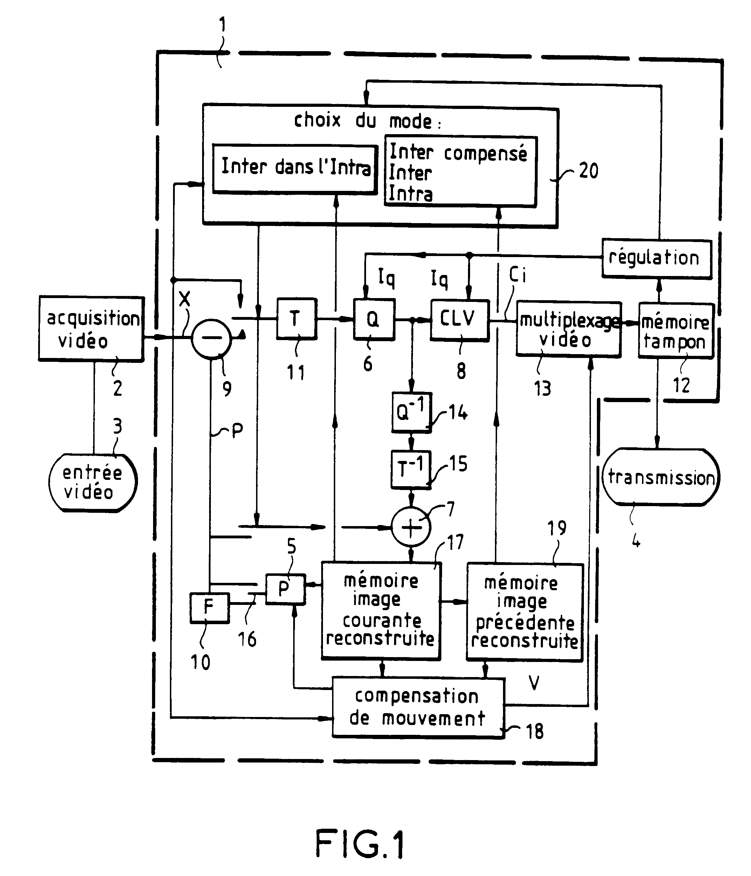

Le codeur selon l'invention qui est représenté à la figure 1 comporte un dispositif de codage différentiel 1 représenté à l'intérieur d'une ligne fermée en pointillés couplé entre un dispositif d'acquisition de signaux vidéo (transformation lignes/blocs) 2 provenant par exemple d'une caméra de télévision 3, et un canal de transmission 4. Le dispositif de codage différentiel 1 comprend de façon connue un prédicteur 5, un quantificateur 6, un dispositif de reconstruction d'images transmises 7 ainsi qu'un allocateur de code formé par un dispositif de codage à longueur variable 8. L'image vidéo à transmettre est appliquée par le dispositif d'acquisition d'images 2 à une première entrée d'un circuit soustracteur 9 dont l'autre entrée est reliée à la sortie du prédicteur d'images 5 par l'intermédiaire ou non d'un filtre de boucle 10. La sortie du circuit soustracteur 9 est reliée à l'entrée du quantificateur 6 par l'intermédiaire d'un dispositif de calcul de transformée cosinus 11. Le prédicteur 5 délivre une valeur de prédiction p sur la première entrée du circuit soustracteur 9. Chaque valeur d'image à coder X est diminuée de sa valeur de prédiction p appliquée sous la forme de la différence d = X-p à l'entrée du quantificateur 6 après avoir été transformée par le dispositif de calcul de transformée cosinus 11.

A chaque niveau de quantification l'allocateur de code 8 associe un code Cᵢ qui est mémorisé dans une mémoire tampon 12 avant d'être transmise sur le canal de transmission 4. Le circuit de multiplexage 13 assure la transmission des codes Cᵢ dans la mémoire tampon 12. Le signal quantifié obtenu à la sortie du circuit de quantification 6 est appliqué sur une première entrée du circuit de reconstruction 7 par l'intermédiaire d'un circuit de déquantification 14 et d'un dispositif de calcul de transformée cosinus inverse 15. La deuxième entrée du circuit de reconstruction 7 est reliée à la sortie du circuit de prédiction 5 ou à la sortie du filtre de boucle 10 par l'intermédiaire d'un circuit d'aiguillage 16.

Les échantillons d'image reconstruits par le circuit de reconstruction d'images 7 sont mémorisés à l'intérieur d'une mémoire d'image 17. Ces échantillons sont ensuite appliqués d'une part, au circuit de prédiction 5 au travers d'un dispositif de compensation de mouvement 18 et d'autre part, dans une mémoire d'image 19 pour mettre en mémoire chaque image reconstruite qui précède l'image courante reconstruite. Un dispositif de commande 20 permet d'effectuer la commutation des modes de codage inter-image ou intra-image. La mémoire d'image 19 qui contient une image reconstruite de l'image qui précède l'image courante permet d'opérer en mode différentiel dans le domaine temporel en effectuant une prédiction inter-image ou inter-image compensée en mouvement.

Selon l'état de remplissage de la mémoire tampon 12 les coefficients sont quantifiés par le quantificateur 6 et déquantifiés par le déquantificateur 14 avec un pas de quantification calculé par l'organe de régulation. Le codage à longueur variable qui est assuré par l'allocateur de code 8 adapte les mots de code aux propriétés statistiques des informations à transmettre. Le rôle de régulation qu'a la boucle formée par les éléments 5 à 19 est de faire évoluer les différents paramètres de codage du contenu de l'image à transmettre en vue d'assurer le débit requis. Le multiplexage vidéo qui est effectué par le multiplexeur 13 a pour fonction d'engendrer le train binaire contenant entre autres les coefficients codés, les modes de codage intra, inter et inter-image compensé et les mots de synchronisation des différentes structures des images.

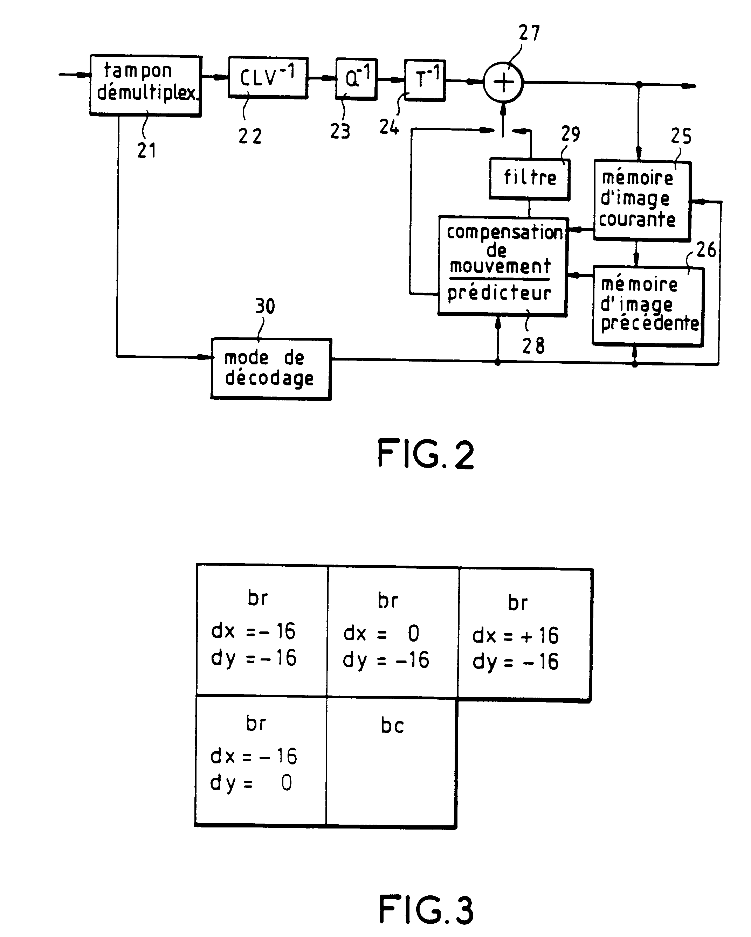

Selon l'invention, un quatrième mode de codage inter dans l'image courante est inséré parmi les trois modes de codage décrits précédemment. Il se caractérise par l'utilisation de la mémoire d'image 17 de l'image courante reconstruite et permet de coder la différence qui existe entre un macrobloc courant et un macrobloc voisin de l'image courante qui est le plus ressemblant parmi les quatre reconstruits respectivement à des positions décalées dx sur l'axe horizontal et dy sur l'axe vertical par rapport aux blocs courants de (-16, 0), (-16, -16), (0, -16), (+16, -16) tels que l'illustre la figure 3. Pour résoudre les problèmes de décision au bord considérés par rapport aux macroblocs précédents reconstruits, il faut considérer que le premier macrobloc situé au coin supérieur gauche ne peut pas être codé par ce mode, soit que, pour la première ligne de macrobloc, seul le macrobloc précédent sur la même ligne (-16, 0) peut être envisagé, soit que pour la première colonne de macroblocs les macroblocs en position (0, -16) et (+16, -16) sont à considérer et enfin pour la dernière colonne de macroblocs les macroblocs en (-16, 0), (-16, -16) et (0, -16) peuvent être considérés. En présence de ces quatre possibilités de codage, le choix du mode de codage dans une approche a priori peut alors être réalisé en choisissant entre le mode compensé inter-image et le mode compensé inter dans l'image courante en s'appuyant sur les différences qui existent entre le macrobloc à coder et les macroblocs compensés puis, en faisant un choix entre le mode compensé et le mode inter-image en s'appuyant sur des mesures de différences inter-image et enfin en faisant un choix entre le mode retenu précédemment et le mode intra-image par comparaison de l'activité ou de la variance des niveaux des gris contenus dans les blocs à transmettre.

La mise en oeuvre du choix du mode de prédiction est assurée grâce à la mémoire d'image courante reconstruite 17 et à la mémoire d'image 19 de l'image précédente reconstruite qui permettent au dispositif de commande 20 de réaliser la différence entre chaque macrobloc courant à transmettre et les macroblocs voisins reconstruits. La sélection du macrobloc dans la mémoire d'image courante reconstruite 17 qui est effectuée par le dispositif de commande 20 correspond alors à la meilleure prédiction du macrobloc courant qui est obtenue par calcul de la différence minimum entre les macroblocs voisins de la figure 3 avec celui à transmettre. Cela permet dès l'initialisation d'une nouvelle séquence d'image de travailler en mode de codage inter-image dans l'image courante avec un coût de codage très faible, en supprimant les risques de débordement de la mémoire tampon 12. L'adjonction d'un mot de code supplémentaire est commandée par le dispositif de commande 20 pour dissocier ce nouveau mode de prédiction des autres modes.

Un décodeur correspondant est représenté à la figure 2. Il comporte une mémoire tampon 21, un décodeur de mots de code à longueur variable 22 couplé à un circuit de déquantification 23 et un circuit de calcul de transformée cosinus inverse 24, l'ensemble des éléments 21, 22, 23 et 24 étant reliés dans cet ordre en série. Il comporte également une mémoire d'image courante 25 couplée à une mémoire d'image de l'image précédente 26. Un circuit de reconstruction de l'image 27 reçoit sur une première entrée le signal décodé par les éléments 21, 22, 23 et 24 et sur une deuxième entrée les signaux lus dans les mémoires 25 et 26 au travers un dispositif de compensation de mouvement 28 et éventuellement d'un filtre passe-bas 29. Un dispositif de commande 30 assure la commande des compensateurs de mouvement et des mémoires d'image 28, 25 et 26 en fonction des mots de code reçus par le décodeur pour placer le circuit de reconstruction d'image 27 soit un mode de codage inter-image, soit un mode de codage inter-image avec compensation de mouvement, soit en mode de codage intra-image, soit en mode de codage de la différence entre chaque bloc courant et quatre autres précédemment reconstruits dans le plus proche voisinage et mémorisé dans la mémoire 25.

Cela permet de limiter l'utilisation du mode de codage intra-image lors du changement brusque d'une scène observée occasionnée par exemple par la transmission d'une première image d'une séquence, un changement de scène ou une variation de gain d'un capteur d'image, en réduisant le pas de quantification des coefficients transformés et par là même le temps de convergence vers le fonctionnement en régime permanent du codeur et du décodeur.

## Revendications

1. Procédé de codage différentiel de blocs d'images de télévision à base de codage inter-image simple et inter-image avec compensation de mouvement, caractérisé en ce qu'il comporte également un mode "inter dans l'intra" qui consiste à coder la différence (9, 11, 6, 8) pixel par pixel entre le bloc courant de l'image à transmettre et un parmi quatre blocs de l'image courante reconstruite (17) dans le plus proche voisinage du bloc courant, le bloc sélectionné étant celui qui parmi les quatre donne pour le codage la meilleure prédiction du bloc courant.

2. Procédé selon la revendication 1, caractérisé en ce qu'il consiste à mémoriser les blocs de l'image courante dans une mémoire d'image (17).

3. Procédé selon l'une quelconque des revendications 1 et 2, caractérisé en ce que les blocs d'image sont codés par transformation cosinus (11).

4. Dispositif pour la mise en oeuvre du procédé selon l'une quelconque des revendications 1 à 3 comprenant un dispositif de codage d'image différentiel comportant un quantificateur (6) couplé à un dispositif de codage à longueur variable (8), un prédicteur (5) et un dispositif de reconstruction de l'image transmise (7) couplé à une première mémoire d'image (17), caractérisé en ce qu'il comprend également des moyens pour coder la différence (9, 11, 6, 8) pixel par pixel entre le bloc courant de l'image à transmettre et un parmi quatre blocs de l'image courante reconstruite (17) dans le plus proche voisinage du bloc courant, le bloc sélectionné étant celui qui parmi les quatre donne pour le codage la meilleure prédiction du bloc courant.

5. Dispositif selon la revendication 4, caractérisé en ce qu'il comprend une deuxième mémoire d'image (19) pour mémoriser les blocs d'image reconstruits dans l'image précédant l'image courante.

6. Dispositif selon la revendication 5, caractérisé en ce qu'il comprend un dispositif de commande (20) du prédicteur (5) pour permettre l'exécution d'un codage des images dans les modes "inter-image" simple, "inter-image avec compensation de mouvement", "intra-image" et le codage de la différence entre chaque bloc courant de l'image à transmettre et un des quatre blocs reconstruits dans le voisinage le plus proche du bloc courant dans l'image courante.

## Patentansprüche

1. Verfahren zur Differenz-Kodierung von Fernseh-Bildblöcken auf der Basis einer einfachen Kodierung inter-frame und inter-frame mit
Bewegungskompensation,
dadurch gekennzeichnet, daß
das Verfahren außerdem einen Modus "inter in intra" enthält, der darin besteht, die Differenz (9, 11, 6, 8) Pixel für Pixel zwischen dem laufenden zu übertragenden Bild block und einem unter vier laufenden rekonstruierten Bildblöcken (17) in nächster Nähe zu dem laufenden Block zu kodieren, wobei der ausgewählte Block derjenige ist, der unter den vier Blöcken für die Kodierung die beste Voraussage des laufenden Blocks ergibt.

2. Verfahren nach Anspruch 1,
dadurch gekennzeichnet, daß die Blöcke des laufenden Bildes in einem Bildspeicher (17) gespeichert werden.

3. Verfahren nach einem der Ansprüche 1 und 2,
dadurch gekennzeichnet, daß die Bildblöcke durch eine Cosinustransformation (11) kodiert werden.

4. Vorrichtung zur Durchführung des Verfahrens nach einem der Ansprüche 1 bis 3 mit einer Vorrichtung für eine Differenz-Bildkodierung mit einem Quantisierer (6), der mit einer Kodiervorrichtung (8) mit variabler Länge, einem Prädikator (5) und einer Vorrichtung (7) zur Rekonstruktion des übertragenen Bildes verbunden ist, die mit einem ersten Bildspeicher (17) verbunden ist, dadurch gekennzeichnet, daß
die Vorrichtung außerdem Mittel (9, 11, 6, 8) zur Kodierung der Differenz Pixel für Pixel zwischen dem laufenden zu übertragenden Bildblock und einem von vier laufenden rekonstruierten Bildblöcken (17) in nächster Nähe zu dem laufenden Block enthält, wobei der ausgewählte Block derjenige ist, der unter den vier Blöcken für die Kodierung die beste Voraussage des laufenden Blockes ergibt.

5. Vorrichtung nach Anspruch 4,
dadurch gekennzeichnet, daß die Vorrichtung einen zweiten Bildspeicher (19) zum Speichern der rekonstruierten Bildblöcke in dem dem laufenden Bild vorangehenden Bild enthält.

6. Vorrichtung nach Anspruch 5,
dadurch gekennzeichnet, daß die Vorrichtung eine Steuereinheit (20) des Prädikators (5) enthält, um die Durchführung einer einfachen Bildkodierung in den Modi einfaches "inter-frame", "inter-frame mit Bewegungskompensation", "intra-frame" und die Kodierung der Differenz zwischen jedem laufenden zu übertragenden Bildblock und einem der vier rekonstruierten Blöcke in der nächsten Nähe zu dem in dem laufenden Bild laufenden Block zu ermöglichen.

## Claims

1. Method for the differential coding of television image blocks based on simple inter-image coding and inter-image coding with movement compensation, characterised in that it also includes an "inter in intra" mode which consists of coding the difference (9, 11 ,6, 8) pixel by pixel between the current block of the image to be transmitted and one amongst four blocks of the reconstructed current image (17) in the closest vicinity of the current block, the selected block being the one which amongst the four gives, for the coding, the best prediction of the current block.

2. Method according to Claim 1, characterised in that it consists of storing the blocks of the current image in an image memory (17).

3. Method according to either one of Claims 1 and 2, characterised in that the image blocks are coded by cosine transformation (11).

4. Device for implementing the method according to any one of Claims 1 to 3, comprising a differential image coding device including a quantiser (6) coupled to a variable-length coding device (8), a predictor (5) and a device for reconstructing the transmitted image (7) coupled to a first image memory (17), characterised in that it also comprises means for coding the difference (9, 11, 6, 8) pixel by pixel between the current block of the image to be transmitted and one amongst four blocks of the reconstructed current image (17) in the closest vicinity of the current block, the selected block being the one which amongst the four gives for the coding the best prediction of the current block.

5. Device according to Claim 4, characterised in that it comprises a second image memory (19) for storing the reconstructed image blocks in the image preceding the current image.

6. Device according to Claim 5, characterised in that it comprises a device (20) for controlling the predictor (5) in order to allow the execution of a coding of the images in the simple "inter-image", "inter-image with movement compensation" and "intra-image" modes and the coding of the difference between each current block of the image to be transmitted and one of the four reconstructed blocks in the closest vicinity of the current block in the current image.
